# EUROPEAN PATENT SPECIFICATION

(11) **EP 1 727 942 B1**
(45) Date of publication and mention of the grant of the patent: **09.07.2008**
(21) Application number: 04811285.8
(22) Date of filing: 18.11.2004
(51) Int. Cl.: E01F 9/04

(54) **TEMPORARY MARKING MATERIAL AND PAVEMENT MARKER**
MATERIAL ZUR VORÜBERGEHENDEN MARKIERUNG UND STRASSENMARKIERUNGSVORRICHTUNG
MATERIAU DE MARQUAGE TEMPORAIRE ET MARQUEUR DE CHAUSSEE

(30) Priority: 28.11.2003 JP 2003398712
(43) Date of publication of application: 06.12.2006
(73) Proprietor: 3M Innovative Properties Company, St. Paul, MN 55133-3427 (US)
(72) Inventor: NAGAOKA, Yoshiyuki, Yamagata 999-3737 (JP)
(74) Representative: Voortmans, Gilbert J.L.
(86) International application number: PCT/US2004/038523
(87) International publication number: WO 2005/053969

(56) References cited:
- EP-A- 0 492 907
- US-A- 4 299 874
- US-B1- 6 533 870

## Description

### FIELD

The present invention relates to a temporary marking material and a pavement marker, and more particularly to a temporary marking material and a pavement marker which can be easily peeled off when they become unnecessary after being disposed on a structure such as a surface of pavement.

Temporary marking materials which are disposed on the surface of a structure are generally used for the formation of pavement markers for temporary marking. After being used, such temporary marking materials must be removed from the surface of the structure or must be made invisible for observers.

The pavement markers for temporary marking are used, for example, for marking border lines such as white lines which show temporary traffic lanes different from real lanes during road construction. The border lines for indication of temporary traffic lanes must be visible for observers during road construction, but they must be made invisible for observers after completion of the construction. Therefore, if the pavement markers for temporary marking are formed using, for example, paints or fusible sheets, in order to restore the state of the surface of the pavement to the original state after completion of the construction, (1) the border lines are covered with a paint of the same color as of the pavement (black or gray color) or (2) the material of the border lines is scraped off to make the border lines invisible for the observers. In this case, the operation for the removal of the border lines is very difficult and requires prodigious labor, and, besides, the operation of (2) might damage the surface of the pavement.

On the other hand, it is known to use marking materials of peeling type comprising adhesive tapes. As such marking materials, Scotch-Lane (trademark for a pavement marker for temporary construction manufactured by 3M Co.) is commercially available. The marking materials of peeling type can be removed by peeling the border lines (such as white lines) comprising tapes adhered to the surface of the pavement after completion of the construction.

Furthermore, JP-A-11-321817 and JP-A-5-319405 disclose use of rubber-like elastic materials as pavement markers for temporary marking, but use of them on a road of much traffic has the problem that the markers are apt to be peeled off from the surface of the road or apt to get out of position.

Moreover, JP-A-11-349211 discloses a paint which foams or expands at a predetermined temperature and becomes easily peelable, though it is not intended to be used as temporary marking materials. This paint is coated on a material body, and is foamed (expanded) by heating after a lapse of service period and can be easily peeled from the material body. Thus, the material body can be reused.

The conventional marking materials of peeling type are relatively low in adhesive force and must be subjected to a primer treatment for enhancing the adhesive force depending on the state of the pavement surface. However, in case the primer treatment is carried out, a large force is needed for peeling the tape, and the removal operation tends to become difficult. On the other hand, there is known a means to coat a material body such as metal, glass or plastic with a paint and then foam or expand the primer of the paint to make easy the peeing of the paint. However, there is no report that this means has been practically applied for temporary marking materials. Moreover, the above means much labor and high cost since the expansible layer should be formed by coating firstly the primer and then the facing paint thereon.

Therefore, the present invention has been made in an attempt to solve the above problems in the conventional technologies and has provided a temporary marking material and pavement marker which hardly peel off or shift during use and can easily be peeled from the structure in a short time by heating when they become unnecessary.

### SUMMARY

According to the present invention, there is provided a temporary marking material comprising a thermally-expansible layer containing a binder, a pigment, and thermally-expansible microballs, wherein said thermally-expansible layer is adhered to surface of a structure for use by virtue of the binder contained in the thermally-expansible layer.

It is preferable that the thermally-expansible microballs are expandable at a predetermined temperature or higher, and expanded thermally-expansible microballs makes thermally-expansible layer expanded in such an extent that the temporary marking material becomes peelable from the surface of said structure due to expansion of the thermally-expansible layer caused by expanded thermally-expansible microballs when heated at said predetermined temperature or higher while the temporary marking material is adhered to the surface of the structure at a temperature of working atmosphere.

It is further preferable that the thermally-expansible microballs have an expandability of at least 10 times in term of volume, compared with the volume thereof at temperature of working atmosphere. It is more preferable that the marking material further comprises a bead layer containing transparent beads; said bead layer being provided on a side of the thermally-expansible layer opposite to a side which contacts with the structure.

According to the present invention, there is also provided a pavement marker comprising a temporary marking material which comprises a thermally-expansible layer containing a binder, a pigment and thermally-expansible microballs, wherein the pavement marker is disposed, for use, on a pavement as a surface of the structure by virtue of the binder contained in the thermally-expansible layer. The present pavement maker may contain the thermally-expansible microballs being expandable at a predetermined temperature or higher in such an extent that the thermally-expansible layer becomes peelable due to the expansion thereof caused by expansion of the heated thermally-expansible microballs. The pavement maker should adhere to the surface of the structure at a temperature of working atmosphere and become peelable from the surface of the structure due to the expansion of the thermally-expansible layer at said predetermined temperature or higher. Anyhow, the present temporary marking material mentioned above can be used for the present pavement marker, inclusive of any one of the preferable embodiments thereof.

As mentioned above, the temporary marking material of the present invention has a thermally-expansible layer containing a binder, a pigment and thermally-expansible microballs. Therefore, when the temporary marking material is disposed on the surface of a structure as a pavement marker or the like and thereafter the pavement marker becomes unnecessary, the pavement marker can be easily peeled off from the surface of the structure since upon heating of the pavement marker, the thermally-expansible microballs thermally expand to result in expansion of the thermally-expansible layer, thereby causing reduction of adhesive force between the pavement marker and the structure.

Furthermore, the pavement marker of the present invention comprises the temporary marking material of the present invention. Therefore, when the pavement marker is disposed on the surface of a structure and after the use, when the pavement marker becomes unnecessary, the pavement marker can be easily peeled off from the surface of the structure because upon heating of the pavement marker, the thermally-expansible microballs thermally expand to result in expansion and deformation of the thermally-expansible layer, thereby causing reduction of adhesive force between the pavement marker and the structure.

### DETAILED DESCRIPTION

The embodiments of the present invention will be explained in detail. These embodiments should not be construed as limiting the present invention in any manner, and changes and modifications may be made without departing from the spirit and scope of the invention.

One embodiment of the temporary marking material of the present invention is as follows: the temporary marking material has a thermally-expansible layer containing a binder, a pigment and thermally-expansible microballs; the volume of the thermally-expansible microballs expand at a predetermined temperature or higher; the thermally-expansible layer expands in accordance with the expansion of the thermally-expansible microballs; and when the temporary marking material is disposed on the surface of a structure as a marker for temporary marking at a temperature of working atmosphere in such a manner that the thermally-expansible layer contacts with and adheres to the surface of the structure, the thermally-expansible layer adheres to the surface of the structure at a temperature of working atmosphere and upon being heated at a predetermined temperature or higher, the thermally-expansible layer expands and the temporary marking material becomes easily peelable from the surface of the structure. Therefore, when the temporary marking material becomes unnecessary, it can be peeled from the surface of the structure by heating the thermally-expansible layer to a predetermined temperature or higher. Here, the term "peelable" denotes such a state that the temporary marking material which adheres to the surface of the structure can be easily peeled off by man power, without using a special mechanical means.

The temporary marking material of this embodiment has a thermally-expansible layer containing a binder, a pigment and thermally-expansible microballs. The binder serves to bind the pigment and the thermally-expansible microballs to maintain the thermally-expansible layer in the form of a layer. When the thermally-expansible layer is directly adhered to a structure such as the surface of pavement, the binder allows the temporary marking material and the structure to adhere to each other. The binder includes those which are conventionally used for paving marking materials. Examples of the binder are transparent materials such as epoxy resins, acrylic resins, urethane resins and silicone varnishes. The binder may contain a curing agent and/or a curing accelerator. The pigment and the thermally-expansible microballs may bind with the binder so as not to fall off from the thermally-expansible layer during use, and are not needed to be uniformly dispersed in the binder.

The thermally-expansible microballs comprise a nearly spherical hollow shell of an elastic material in which a thermally-expansible gas and/or liquid is encapsulated. The elastic material is not particularly limited, and examples thereof are acrylic copolymers, vinyl chloride-based copolymers, etc. The gas and liquid enclosed in the shell include, for example, isobutane, isopentane, isooctane, n-pentane, etc. The thermal expansion coefficient of the thermally-expansible microballs is such that when the microball is heated to a predetermined temperature or higher, the volume thereof increases by 10 times or more, especially 15 times or more the volume of the microball at a temperature of working atmosphere. This is for markedly lowering the adhesion of the temporary marking material to the structure due to the expansion and easily peeling the temporary marking material from the structure. Here, the thermal expansion coefficient of the thermally-expansible balls means a ratio of the volume of the microball after expansion to the standard volume of the microball, that is, the volume before thermal expansion.

The expression "temperature of working atmosphere" in this specification means an average temperature (atmospheric temperature) during temporary arrangement of the marking material on the structure. The environmental temperature of the surface of the pavement on which the marking material of the present invention is mainly used varies depending on seasons and extends over a wide range of about -20°C to about 40°C. Therefore, it is preferred to select thermally-expansible microballs having a thermal expansion coefficient suitable for the environmental temperature at which the marking material is used.

The average particle diameter of the thermally-expansible microballs is about 5 µm to about 50 µm. As the commercially available thermally-expansible microballs, there may be used EXPANCEL microspheres manufactured by Japan Phyllite Co., Ltd, MATSUMOTO microspheres manufactured by Matsumoto Yushi Co., Ltd., KUREHA microspheres manufactured by Kureha Chemical Co., Ltd., and the like. The shape of the thermally-expansible microballs may not necessarily be true sphere, and may be distorted or dented. The particle diameter of the deformed microball is a diameter of a sphere which is assumed to have the same volume as of the deformed microball.

The pigment used has a color different from that of the surface of the structure and is selected so that it gives markers which are clearly visible for observers. There may be used, for example, titanium dioxide, carbon black, titanium yellow, phthalocyanine blue, phthalocyanine green, perylene red, etc.

The content of the thermally-expansible microballs based on 100 parts by weight of the binder is usually 10-300 parts by weight, suitably 50-150 parts by weight. If the content of the thermally-expansible microballs is too small, the marker cannot be easily peeled by heating, and if it is too large, the thermally-expansible microballs are apt to fall off during temporary marking operation.

The content of the pigment based on 100 parts by weight of the binder is usually 0.1-100 parts by weight, suitably 1-50 parts by weight. If the content of the pigment is too small, the temporary marking material tends to be light in color, and if it is too large, the pigment might fall off from the temporary marking material during use.

The heating temperature at peeling of the marker, that is, the predetermined temperature, is usually not lower than 80°C, suitably not lower than 100°C, especially suitably 100-150°C. If the heating temperature is too low, the peeling operation requires a long time, and this would cancel out the simplicity of the operation. If it is too high, gas is sometimes generated. Therefore, for safety's sake, it is preferred to use heat sources such as infrared heaters and far infrared heaters rather than fire such as gas burner. From these viewpoints, the temporary marking material preferably becomes easily peelable after it is heated at a temperature of usually 80-200°C, preferably 100-150°C for 1 second to 10 minutes.

The thermally-expansible layer preferably comprises a dry film of a coloring paint comprising a vehicle containing a solvent and a binder dissolved or dispersed in the solvent, and thermally-expansible microballs and pigment dispersed in the vehicle. In this case, the thermally-expansible layer can be easily formed in the form of a layer.

The thickness of the thermally-expansible layer is usually 1-5000 µm, suitably 10-500 µm. If the layer is too thin, the color of the thermally-expansible layer tends to be seen pale, and if it is too thick, there is the possibility of the thermally-expansible layer being damaged upon contact with cars or the like during use.

The thermally-expansible layer may further contain other materials than those mentioned hereinabove. For example, it may contain transparent beads having a refractive index of 1.5-2.3 for the purpose of enhancing the visibility at night. The transparent beads include glass beads, ceramic beads, etc. Moreover, the thermal-expansible layer may contain aggregates such as natural stones, artificial stones, ceramics, etc. for improving the wear resistance of the layer.

The temporary marking material may comprise only the thermally-expansible layer, but it is preferred that a beads layer containing the above-mentioned transparent beads is provided on the side of the thermally-expansible layer opposite to the side which contacts with the structure; that is, the side of the thermally-expansible layer which does not contact with the structure and is exposed on the surface of the structure and visible for observers. The transparent bead layer is preferably formed by scattering transparent beads on the thermally-expansible layer before drying.

The temporary marking material of this embodiment can be produced in the following manner. First, a binder is dissolved or dispersed in a solvent to prepare a vehicle. Then, thermally-expansible microballs and a pigment are dispersed in the vehicle to prepare a coloring paint. The resulting coloring paint is coated on a surface such as the surface of pavement and dried to form a dry paint film which adheres to the surface of pavement. Thus, the thermally-expansible layer is formed. Production of a temporary marking material comprising only the thermally-expansible layer is completed in this way. When a temporary marking material additionally comprising a bead layer is produced, the coloring paint is coated on a surface such as the surface of pavement and then transparent beads are scattered on the surface of the paint film before drying, followed by drying to produce a temporary marking material comprising a thermally-expansible layer and a bead layer provided on the surface of the thermally-expansible layer.

As a solvent, water is preferred, and there may also be used alcohols, ketones, esters, aliphatic and aromatic solvents. The content of the solvent in the coloring paint is preferably 10-90% by weight. If the content is lower than 10% by weight, concentration and viscosity of the coloring paint are high and hence it sometimes becomes difficult to form the temporary marking material in the desired thickness and shape. If it is higher than 90% by weight, drying properties are inferior and, furthermore, concentration and viscosity of the coloring paint are low and hence it sometimes becomes difficult to form the temporary marking material in the desired thickness and shape.

The temporary marking material of this embodiment can be used as the pavement marker of the present invention shown below.

An embodiment of the pavement marker of the present invention will be explained. One embodiment of the pavement marker of the present invention comprises the embodiment of the temporary marking material of the present invention explained hereinabove, and the pavement marker is disposed on the surface of pavement as a surface of the structure. The pavement marker of this embodiment can be produced in the same manner as in the embodiment of the temporary marking material of the present invention as mentioned above.

The pavement marker of this embodiment comprises the temporary marking material of the present invention mentioned above. Therefore, when the pavement marker is disposed on the surface of a structure, that is, surface of pavement for use and, thereafter, when it becomes unnecessary, the thermally-expansible microballs thermally expand by heating of the pavement marker to bring about expansion and deformation of the thermally-expansible layer. As a result, adhesion between the pavement marker and the structure lowers, and the pavement marker can be easily peeled from the surface of the structure, that is, the surface of pavement.

Such pavement marker shows a border line of traffic lane during road construction, and after completion of the construction, is peeled from the surface of the pavement and thus can be made invisible for observers. The color of the thermally-expansible layer is usually white, blue or yellow.

This pavement marker is used for marking border lines such as white lines which are for showing temporary traffic lanes different from the real traffic lanes. These border lines for showing temporary traffic lanes can be easily peeled off to make them invisible for observers after completion of construction, and labor for the peeling operation can be diminished and the possibility of damaging the surface of pavement caused by scraping of the pavement marker can be removed.

The pavement marker for temporary marking can also be used for drawing letters and/or signs on the surface of pavement for drivers or pedestrians being able to see the guiding information. After the use of the guiding information including letters and/or signs, they can be easily peeled by heating the thermally-expansible layer of the pavement mark to make them invisible for observers.

### EXAMPLE

The following coloring paint was coated directly on the surface of asphalted road, and glass beads were scattered thereon, followed by drying to form a thermally-expansible layer and a bead layer. Thus, a pavement marker comprising a temporary marking material was obtained. The coating of the coloring paint was carried out using a coating roller to form a marking material in the form of a white line of 20 cm in width and 50 cm in length. The glass beads (trademark: GK-19 manufactured by Japan Electric Glass Co., Ltd.) were scattered before drying of the coated paint, followed by air drying for about 10 minutes to form a film, thereby providing a bead layer on the thermally-expansible layer.

The coloring paint used was prepared by dispersing 33.3 parts by weight of thermally-expansible microballs (trademark: M330 manufactured by Kureha Chemical Co., Ltd.) in 66.7 parts by weight of white acrylic emulsion (trademark: HARDLINEAQUA #21 manufactured by Atomix Co., Ltd.) as a binder containing a white pigment.

After a lapse of 1 month from the formation of the pavement marker of this Example, the white line was heated and expanded using a movable far infrared heater, followed by cleaning by a vacuum type cleaner, and as a result, the white line could be easily removed. Thereafter, when one drove a car on the pavement, the driver recognized no trace of the marker of this Example disposed on the pavement in night and day.

### COMPARATIVE EXAMPLE

A pavement marker was obtained in the same manner as in the above Example using the following melting type paint. This paint was a melting type pavement marking material. This paint was molten at 200°C and coated on the surface of pavement, followed by solidification by cooling to form a white line.

Composition of the paint:
Titanium dioxide =6.5 parts by weight
Calcium carbonate = 61.0 parts by weight
Petroleum resin = 15.0 parts by weight
Plasticizer =1.5 parts by weight
Glass beads =16.0 parts by weight

When the pavement marker of this Comparative Example was heated at 200-300°C for 5 minutes by a burner after a lapse of 1 month from the formation of the marker, only the surface resin layer was carbonized and changed to black in its color, but the resin layer under the carbonized resin layer remained white in its color. When after a lapse of 1 week, one drove a car on the pavement on which the marking material was formed and observed the surface of the pavement, the driver saw the original white line exposed by the removal of the carbonized resin layer. Therefore, it was attempted to remove the original white line, that is, the pavement marker of this Comparative Example so as to make it invisible for the driver, but it could be removed only by using a cutting machine and much labor and time were required.

The temporary marking material and pavement marker of the present invention can be utilized for forming temporary lines, signs, patterns, etc. on the surface of a pavement which can be removed in case they become unnecessary. The temporary marking material and pavement marker of the present invention hardly peel off or move during temporary marking, and when they become unnecessary, they can be easily peeled off by heating from the structure in a short time.

## Claims

1. A temporary marking material comprising
a thermally-expansible layer containing a binder,
a pigment, and
thermally-expansible microballs,
wherein said thermally-expansible layer is adherable to surface of a structure for use by virtue of the binder contained in the thermally-expansible layer.

2. A temporary marking material according to claim 1,
wherein the thermally-expansible microballs are expandable at a predetermined temperature or higher, and expanded thermally-expansible microballs makes thermally-expansible layer expanded; and
wherein the temporary marking material becomes peelable from surface of said structure due to expansion of the thermally-expansible layer caused by expanded thermally-expansible microballs when heated at said predetermined temperature or higher while the temporary marking material is adhered to the surface of the structure at a temperature of working atmosphere.

3. A temporary marking material according to claim 2,
wherein the thermally-expansible microballs have an expandability of at least 10 times in term of volume, compared with the volume thereof at temperature of working atmosphere.

4. A temporary marking material according to claim 1,
wherein the marking material further comprises a bead layer containing transparent beads; said bead layer being provided on a side of the thermally-expansible layer opposite to a side which contacts with the structure.

5. A pavement marker comprising a temporary marking material which comprises
a thermally-expansible layer containing a binder,
a pigment and
thermally-expansible microballs,
wherein the pavement marker is disposable, in use, on a pavement as a surface of the structure by virtue of the binder contained in the thermally-expansible layer.

6. A pavement marker according to claim 5,
wherein the thermally-expansible microballs are expandable at a predetermined temperature or higher, and expanded thermally-expansible microballs makes thermally-expansible layer expanded; and
wherein the temporary marking material becomes peelable from surface of said structure due to expansion of the thermally-expansible layer caused by expanded thermally-expansible microballs when heated at said predetermined temperature or higher while the temporary marking material is adhered to the surface of the structure at a temperature of working atmosphere.

7. A pavement marker according to claim 5,
wherein the thermally-expansible microballs have an expandability of at least 10 times in term of volume, compared with the volume thereof at temperature of working atmosphere.

8. A pavement marker according to claim 5,
wherein the marking material further comprises a bead layer containing transparent beads; said bead layer being provided on a side of the thermally-expansible layer opposite to a side which contacts with the structure.

## Patentansprüche

1. Material zur vorübergehenden Markierung, mit
einer thermisch ausdehnbaren Schicht, welche ein Bindemittel enthält,
einen Pigment, und
thermisch ausdehnbaren Mikrokugeln,
wobei die thermisch ausdehnbare Schicht aufgrund des Bindemittels, das in der thermisch ausdehnbaren Schicht enthalten ist, an die Oberfläche einer Gebrauchsstruktur angehaftet werden kann.

2. Material zur vorübergehenden Markierung nach Anspruch 1, wobei die thermisch ausdehnbaren Mikrokugeln bei einer vorbestimmten Temperatur oder höher ausdehnbar sind und die ausgedehnten thermisch ausdehnbaren Mikrokugeln die thermisch ausdehnbare Schicht ausdehnen; und wobei das Material zur vorübergehenden Markierung aufgrund der Ausdehnung der thermisch ausdehnbaren Schicht, verursacht durch ausgedehnte thermisch ausdehnbare Mikrokugeln, wenn diese mit der vorbestimmten Temperatur oder höher erhitzt werden, von der Oberfläche der Struktur abgezogen werden kann, während das Material zur vorübergehenden Markierung bei einer Temperatur der Arbeitsumgebung an der Oberfläche der Struktur anhaftet.

3. Material zur vorübergehenden Markierung nach Anspruch 2, wobei die thermisch ausdehnbaren Mikrokugeln eine Ausdehnbarkeit von mindestens 10 Mal hinsichtlich des Volumens im Vergleich zu ihrem Volumen bei der Temperatur der Arbeitsumgebung aufweisen.

4. Material zur vorübergehenden Markierung nach Anspruch 1, wobei das Material zur Markierung ferner eine Perlenschicht aufweist, welche transparente Perlen enthält, wobei die Perlenschicht auf einer Seite der thermisch ausdehnbaren Schicht gegenüber der Seite, welche in Kontakt mit der Struktur steht, bereitgestellt ist.

5. Straßenmarkierung, aufweisend ein Material zur vorübergehenden Markierung, welches Folgendes aufweist:
eine thermisch ausdehnbare Schicht, welche ein Bindemittel enthält,
ein Pigment, und
thermisch ausdehnbare Mikrokugeln,
wobei die Straßenmarkierung aufgrund des Bindemittels, das in der thermisch ausdehnbaren Schicht enthalten ist, zum einmaligen Gebrauch auf einem Straßenbelag als eine Oberfläche der Struktur eingesetzt werden kann.

6. Straßenmarkierung nach Anspruch 5,
wobei die thermisch ausdehnbaren Mikrokugeln bei einer vorbestimmten Temperatur oder höher ausdehnbar sind und die ausgedehnten thermisch ausdehnbaren Mikrokugeln die thermisch ausdehnbare Schicht ausdehnen; und
wobei das Material zur vorübergehenden Markierung aufgrund der Ausdehnung der thermisch ausdehnbaren Schicht, verursacht durch ausgedehnte thermisch ausdehnbare Mikrokugeln, wenn diese bei der vorbestimmten Temperatur oder höher erhitzt werden, von der Oberfläche der Struktur abgezogen werden kann, während das Material zur vorübergehenden Markierung bei einer Temperatur der Arbeitsumgebung an der Oberfläche der Struktur anhaftet.

7. Straßenmarkierung nach Anspruch 5,
wobei die thermisch ausdehnbaren Mikrokugeln eine Ausdehnbarkeit von mindestens 10 Mal hinsichtlich des Volumens im Vergleich zu ihrem Volumen bei der Temperatur der Arbeitsumgebung aufweisen.

8. Straßenmarkierung nach Anspruch 5,
wobei das Material zur Markierung ferner eine Perlenschicht aufweist, welche transparente Perlen enthält, wobei die Perlenschicht auf einer Seite der thermisch ausdehnbaren Schicht gegenüber der Seite, welche in Kontakt mit der Struktur steht, bereitgestellt ist.

## Revendications

1. Matériau de marquage temporaire comprenant
une couche expansible thermiquement contenant un liant,
un pigment, et
des microbilles expansibles thermiquement,
dans lequel ladite couche expansible thermiquement peut être collée sur une surface d'une structure pour son utilisation au moyen du liant contenu dans la couche expansible thermiquement.

2. Matériau de marquage temporaire selon la revendication 1,
dans lequel les microbilles expansibles thermiquement sont expansibles à une température prédéterminée ou à une température supérieure, et les microbilles expansibles thermiquement expansées causent l'expansion de la couche expansible thermiquement ; et
dans lequel il devient possible de décoller le matériau de marquage temporaire de la surface de ladite structure en raison de l'expansion de la couche expansible thermiquement causée par les microbilles expansibles thermiquement expansées quand elles sont chauffées à ladite température prédéterminée ou à une température supérieure tandis que le matériau de marquage temporaire est collé sur la surface de la structure à une température correspondant à l'atmosphère de travail.

3. Matériau de marquage temporaire selon la revendication 2,
dans lequel les microbilles expansibles thermiquement ont une expansibilité d'au moins 10 fois en volume, par comparaison avec le volume de celles-ci à une température correspondant à l'atmosphère de travail.

4. Matériau de marquage temporaire selon la revendication 1,
dans lequel le matériau de marquage comprend en outre une couche de billes contenant des billes transparentes ; ladite couche de billes étant présente sur un côté de la couche expansible thermiquement opposé à un côté qui entre en contact avec la structure.

5. Marqueur de chaussée comprenant un matériau de marquage temporaire qui comprend
une couche expansible thermiquement contenant un liant,
un pigment, et
des microbilles expansibles thermiquement,
dans lequel le marqueur de chaussée peut être disposé, en cours d'utilisation, sur une chaussée en tant que surface de la structure au moyen du liant contenu dans la couche expansible thermiquement.

6. Marqueur de chaussée selon la revendication 5,
dans lequel les microbilles expansibles thermiquement sont expansibles à une température prédéterminée ou à une température supérieure, et les microbilles expansibles thermiquement expansées causent l'expansion de la couche expansible thermiquement ; et
dans lequel il devient possible de décoller le matériau de marquage temporaire de la surface de ladite structure en raison de l'expansion de la couche expansible thermiquement causée par les microbilles expansibles thermiquement expansées quand elles sont chauffées à ladite température prédéterminée ou à une température supérieure tandis que le matériau de marquage temporaire est collé sur la surface de la structure à une température correspondant à l'atmosphère de travail.

7. Marqueur de chaussée selon la revendication 5,
dans lequel les microbilles expansibles thermiquement ont une expansibilité d'au moins 10 fois en volume, par comparaison avec le volume de celles-ci à une température correspondant à l'atmosphère de travail.

8. Marqueur de chaussée selon la revendication 5,
dans lequel le matériau de marquage comprend en outre une couche de billes contenant des billes transparentes ; ladite couche de billes étant présente sur un côté de la couche expansible thermiquement opposé à un côté qui entre en contact avec la structure.
